# EUROPEAN PATENT APPLICATION

(11) **EP 4 239 476 A1**
(43) Date of publication of application: **06.09.2023**
(21) Application number: 21890892.9
(22) Date of filing: 16.10.2021
(51) Int. Cl.: G06F 9/48

(54) **METHOD, SYSTEM, AND DEVICE FOR MANAGING ARTIFICIAL INTELLIGENCE APPLICATION TASK, AND STORAGE MEDIUM**

(30) Priority: 12.11.2020 CN 202011262475; 08.02.2021 CN 202110172700
(71) Applicant: Huawei Cloud Computing Technologies Co., Ltd., Guizhou 550025 (CN)
(72) Inventor: CHEN, Pu, Shenzhen, Guangdong 518129 (CN)
(74) Representative: Gill Jennings & Every LLP
(86) International application number: PCT/CN2021/124253
(87) International publication number: WO 2022/100365

(57) **Abstract**

An artificial intelligence application task management method, a system, a device, and a storage medium are provided, and belong to the field of AI technologies. An AI application task relates to a plurality of computing tasks. The method includes: In a process in which a first computing device executes the plurality of computing tasks, a management apparatus determines a target computing task that is in the plurality of computing tasks and that is to be executed by a second computing device, where there is a data association between the target computing task and at least one other computing task related to the AI application task. The management apparatus sends a first instruction to the first computing device. The first computing device sends, to the second computing device according to the first instruction, data obtained by executing the at least one other computing task. The second computing device uses the data as input data of the target computing task, and executes the target computing task based on the input data. This helps improve resource utilization of the computing device that executes the AI application task and/or processing efficiency of the computing task.

## Description

This application claims priority to Chinese Patent Application No. 202011262475.X, filed with the China National Intellectual Property Administration on November 12, 2020 and entitled "METHOD AND DEVICE FOR DYNAMIC SCHEDULING OF AI SYSTEM RESOURCE", and Chinese Patent Application No. 202110172700.9, filed with the China National Intellectual Property Administration on February 8, 2021 and entitled "ARTIFICIAL INTELLIGENCE APPLICATION TASK MANAGEMENT METHOD, SYSTEM, DEVICE, AND STORAGE MEDIUM", which are incorporated herein by reference in their entireties.

### TECHNICAL FIELD

This application relates to the field of artificial intelligence (artificial intelligence, AI) technologies, and in particular, to an AI application task management method, a system, a device, and a storage medium.

### BACKGROUND

With the rapid development of artificial intelligence technologies, the artificial intelligence technologies are used to resolve problems in increasingly more application scenarios. A plurality of problems need to be resolved in one application scenario. For example, in a traffic intersection video analysis and recognition scenario, a plurality of problems such as vehicle detection, tracking, vehicle type recognition, color recognition, traffic light detection, traffic light status recognition, person detection and tracking, and non-motorized vehicle detection and tracking need to be resolved.

In a related technology, when a solution related to an application scenario includes a plurality of to-be-resolved problems, an AI application task in one application scenario may include a plurality of computing tasks, each computing task resolves some problems in the application scenario, and the plurality of computing tasks may interact with each other, to together form a solution for this application scenario. The plurality of computing tasks may be deployed on a single computing device in a centralized manner, or may be deployed on a plurality of computing devices in a distributed manner.

Currently, when executing the plurality of computing tasks related to the AI application task, the computing device can execute the computing tasks only in a pre-deployment manner. In an actual application scenario, in a process in which the computing device executes the computing tasks in the pre-deployment manner, resource utilization in the computing device may be low or processing efficiency of the computing tasks may be low.

### SUMMARY

This application provides an AI application task management method, a system, a device, and a storage medium, to help improve resource utilization of a computing device that executes an AI application task and/or processing efficiency of a computing task, and improve running performance of an overall system used to implement the AI application task. The technical solutions provided in this application are as follows.

According to a first aspect, this application provides an AI application task management method. One AI application task may include a plurality of computing tasks, and each computing task is used to implement some functions of a solution. The method includes: In a process in which a first computing device executes the plurality of computing tasks, a management apparatus determines a target computing task from the plurality of computing tasks, where the target computing task is a computing task to be executed by a second computing device, and there is a data association between the target computing task and at least one other computing task related to the AI application task. The management apparatus sends a first instruction to the first computing device. The first computing device sends, to the second computing device according to the first instruction, data obtained by executing the at least one other computing task. The second computing device uses the data as input data of the target computing task, and executes the target computing task based on the input data. The another computing task is a computing task other than the target computing task in the AI application task. A data association between computing tasks means that input data of one computing task is output data of one or more computing tasks that have been invoked.

In the process in which the first computing device executes the plurality of computing tasks included in the AI application task, the management apparatus determines, from the plurality of computing tasks, the target computing task to be executed by the second computing device, and the first computing device sends, to the second computing device, the data required for executing the target computing task. The second computing device uses the data sent by the first computing device as the input data of the target computing task, and executes the target computing task based on the input data. In a process in which the first computing device executes the AI application task, the target computing task can be adjusted to be executed by the second computing device. The computing task can be flexibly scheduled in the process in which the AI application task is executed. This helps improve resource utilization and/or computing task processing efficiency of the first computing device and the second computing device, and improves running performance of an entire system used to implement the AI application task.

In a possible implementation, before that a management apparatus determines a target computing task from the plurality of computing tasks, the method further includes: The management apparatus obtains first resource usage information when the plurality of computing tasks are executed by the first computing device. Correspondingly, that a management apparatus determines a target computing task from the plurality of computing tasks includes: The management apparatus determines the target computing task from the plurality of computing tasks based on the first resource usage information.

The first resource usage information is used to reflect a resource usage status of a computing task in the first AI application task and a resource status of the first computing device. The target computing task can be selected, based on the computing task in the first AI application task and an actual resource usage status of the first computing device, from the plurality of computing tasks by obtaining the first resource usage information when the plurality of computing tasks are executed by the first computing device, and determining the target computing task from the plurality of computing tasks based on the first resource usage information. The target computing task is scheduled. This helps improve the resource utilization and/or the computing task processing efficiency of the first computing device.

Optionally, when a running program of the target computing task is not deployed on the second computing device, before the target computing task is executed by the second computing device, the running program of the target computing task needs to be deployed on the second computing device. Based on different implementations in which the second computing device obtains the running program of the target computing task, the method further includes: The management apparatus sends the running program of the target computing task to the second computing device, or the management apparatus sends a second instruction to the second computing device, to instruct the second computing device to obtain the running program of the target computing task.

In a possible implementation, to ensure running performance of the second computing device in executing the target computing task, the method further includes: The management apparatus sends a third instruction to the second computing device, to instruct the second computing device to prepare a computing resource for executing the target computing task.

In an implementation in which the management apparatus determines the target computing task from the plurality of computing tasks, the management apparatus may determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

When the running efficiency of the computing task in the first AI application task and/or the utilization status of the resources of the computing tasks in the first AI application task do/does not meet the corresponding condition, the target computing task to be executed by the second computing device is determined from the plurality of computing tasks in the first AI application task. The running efficiency and/or the resource utilization of the first AI application task can be effectively improved.

The management apparatus may manage, based on resource usage statuses of a plurality of computing devices managed by the management apparatus, computing tasks executed by the computing devices, to improve running performance of an entire system including the plurality of computing devices. The method further includes: The management apparatus obtains second resource usage information of a computing task executed by the second computing device. Correspondingly, that a management apparatus determines a target computing task from the plurality of computing tasks includes: The management apparatus determines the target computing task from the plurality of computing tasks based on the first resource usage information and the second resource usage information.

Running efficiency and resource utilization of Al application tasks running in the plurality of computing devices managed by the management apparatus can be considered from a global perspective by determining that the target computing task is executed by the second computing device based on the first resource usage information and the second resource usage information. An AI computing task in the first AI application task can be managed when the overall running efficiency and/or the resource utilization status of the first AI application task are/is poor. Short plank effect of the entire system can be reduced at the cost of executing a scheduling operation, to improve the running performance of the entire system of the plurality of computing devices managed by the management apparatus.

In a possible implementation, the first resource usage information includes running information of at least one computing task of the plurality of computing tasks and resource information of the first computing device.

Optionally, the running information of the at least one computing task is obtained based on one or more of the following running parameters: a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task.

The resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

In a possible implementation, the management apparatus is deployed on the first computing device, the second computing device, or a third computing device, and the third computing device is connected to the first computing device and the second computing device through a communication path.

The first computing device is a graphics card, an AI computing chip, or a server; the second computing device is a graphics card, an AI computing chip, or a server; and the third computing device is a graphics card, an AI computing chip, or a server.

According to a second aspect, this application provides an AI system. The AI system includes a first computing device, a second computing device, and a management apparatus. The management apparatus is configured to determine a target computing task from a plurality of computing tasks, where the target computing task is a computing task to be executed by the second computing device and there is a data association between the target computing task and at least one other computing task related to an AI application task. The management apparatus is further configured to send a first instruction to the first computing device. The first computing device is configured to send, to the second computing device according to the first instruction, data obtained by executing the at least one other computing task. The second computing device is configured to: use the data as input data of the target computing task, and execute the target computing task based on the input data.

Optionally, the management apparatus is further configured to: obtain first resource usage information when the plurality of computing tasks are executed by the first computing device; and determine the target computing task from the plurality of computing tasks based on the first resource usage information.

Optionally, when a running program of the target computing task is not deployed on the second computing device, the management apparatus is further configured to: send the running program of the target computing task to the second computing device, or send a second instruction to the second computing device, to instruct the second computing device to obtain the running program of the target computing task.

Optionally, the management apparatus is further configured to send a third instruction to the second computing device, to instruct the second computing device to prepare a computing resource for executing the target computing task.

Optionally, the management apparatus is specifically configured to determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

Optionally, the management apparatus is further configured to obtain second resource usage information of a computing task executed by the second computing device. The management apparatus is specifically configured to determine the target computing task from the plurality of computing tasks based on the first resource usage information and the second resource usage information.

Optionally, the first resource usage information includes running information of at least one computing task of the plurality of computing tasks and resource information of the first computing device.

Optionally, the running information of the at least one computing task is obtained based on one or more of the following running parameters: a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task.

The resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

Optionally, the management apparatus is deployed on the first computing device, the second computing device, or a third computing device, and the third computing device is connected to the first computing device and the second computing device through a communication path.

Optionally, the first computing device is a graphics card, an AI computing chip, or a server; the second computing device is a graphics card, an AI computing chip, or a server; and the third computing device is a graphics card, an AI computing chip, or a server.

According to a third aspect, this application provides a management apparatus. The management apparatus includes a control module and a scheduling module. The control module is configured to: in a process in which a first computing device executes a plurality of computing tasks, determine a target computing task from the plurality of computing tasks, where the target computing task is a computing task to be executed by a second computing device, and there is a data association between the target computing task and at least one other computing task related to an AI application task. The scheduling module is configured to send a first instruction to the first computing device, where the first instruction instructs the first computing device to send, to the target computing task in the second computing device, data obtained by executing the at least one other computing task.

Optionally, the control module is further configured to: obtain first resource usage information when the plurality of computing tasks are executed by the first computing device; and determine the target computing task from the plurality of computing tasks based on the first resource usage information.

Optionally, when a running program of the target computing task is not deployed on the second computing device, the scheduling module is further configured to: send the running program of the target computing task to the second computing device, or send a second instruction to the second computing device, to instruct the second computing device to obtain the running program of the target computing task.

Optionally, the scheduling module is further configured to send a third instruction to the second computing device, to instruct the second computing device to prepare a computing resource for executing the target computing task.

Optionally, the control module is specifically configured to determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

Optionally, the control module is further configured to obtain second resource usage information of a computing task executed by the second computing device. The control module is specifically configured to determine the target computing task from the plurality of computing tasks based on the first resource usage information and the second resource usage information.

Optionally, the first resource usage information includes running information of at least one computing task of the plurality of computing tasks and resource information of the first computing device.

Optionally, the running information of the at least one computing task is obtained based on one or more of the following running parameters: a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task.

The resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

Optionally, the management apparatus is deployed on the first computing device, the second computing device, or a third computing device, and the third computing device is connected to the first computing device and the second computing device through a communication path.

Optionally, the first computing device is a graphics card, an AI computing chip, or a server; the second computing device is a graphics card, an AI computing chip, or a server; and the third computing device is a graphics card, an AI computing chip, or a server.

According to a fourth aspect, this application provides an electronic device. The electronic device includes a memory and a processor, and when the processor executes computer instructions stored in the memory, the electronic device implements a function of the apparatus according to the third aspect.

According to a fifth aspect, this application provides a computer-readable storage medium, where the computer-readable storage medium is a non-volatile computer readable storage medium. The computer-readable storage medium stores program instructions, and when the program instructions are run by an electronic device, the electronic device implements a function of the apparatus according to the third aspect.

According to a sixth aspect, this application provides a computer program product including instructions. When the computer program product is run on a computer, the computer is enabled to implement a function of the apparatus according to the third aspect.

### BRIEF DESCRIPTION OF DRAWINGS

FIG. 1 is a schematic diagram of execution logic of an AI application task according to an embodiment of this application;
FIG. 2 is a schematic diagram of an AI system related to an AI application task management method according to an embodiment of this application;
FIG. 3 is a schematic diagram of an AI system related to another AI application task management method according to an embodiment of this application;
FIG. 4 is a schematic diagram in which a function of a management apparatus can be abstracted by a cloud service provider into a management cloud service on a cloud platform according to an embodiment of this application;
FIG. 5 is a schematic diagram of an AI system related to still another AI application task management method according to an embodiment of this application;
FIG. 6 is a flowchart of an AI application task management method according to an embodiment of this application;
FIG. 7A, FIG. 7B, and FIG. 7C are a flowchart in which an AI application task management method is implemented by using a function module according to an embodiment of this application;
FIG. 8 is a schematic diagram of execution logic of an AI application task according to an embodiment of this application;
FIG. 9 is a schematic diagram of execution logic of a first AI application task and a second AI application task after a target computing task in the first AI application task is scheduled to a second computing device for execution according to an embodiment of this application;
FIG. 10 is a schematic diagram of other execution logic of a first AI application task and a second AI application task after a target computing task in the first AI application task is scheduled to a second computing device for execution according to an embodiment of this application; and
FIG. 11 is a schematic diagram of a structure of an electronic device according to an embodiment of this application.

### DESCRIPTION OF EMBODIMENTS

To make the objectives, technical solutions, and advantages of this application clearer, the following further describes the implementations of this application in detail with reference to the accompanying drawings.

With the development of AI technologies, the AI technologies are used to resolve problems in increasingly more application scenarios. An AI application task may be used to implement a solution for a specific target of an application scenario. For example, for a traffic scenario, a real-time video analysis solution may be provided, to obtain a vehicle track, a vehicle attribute, and a real-time traffic light status in the traffic scenario. One AI application task indicates a solution provided for a specific target of one application scenario, and the AI application task may be executed by a computing device to implement a specific function. Usually, one AI application task relates to a plurality of computing tasks, and each computing task is used to implement some functions of a solution. Therefore, it may also be considered that the AI application task includes the plurality of computing tasks. A data association may exist between some computing tasks in the AI application task. For example, input data of one computing task is output data of one or more computing tasks that have been invoked. Therefore, execution time of the some computing tasks in the AI application task usually has a sequence.

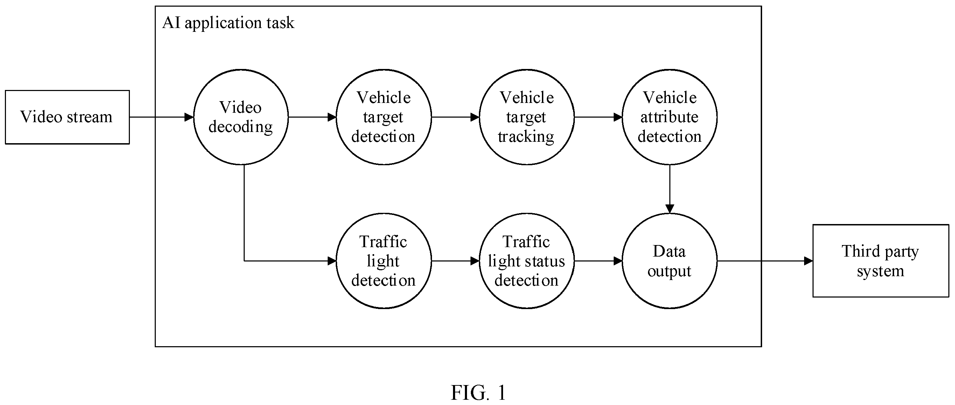

An example of video stream analysis in the traffic scenario is used. As shown in FIG. 1, an AI application task can be used to analyze a traffic video stream. The AI application task includes a plurality of computing tasks. The plurality of computing tasks are separately used to implement video decoding, vehicle target detection, vehicle target tracking, vehicle attribute detection, traffic light detection, traffic light status detection, and data output. Each computing task is indicated by using a circle in FIG. 1, and an arrow in FIG. 1 indicates a data flow direction between the computing tasks. When executing the AI application task, a computing device sequentially executes the computing tasks for a same video stream based on a path indicated by arrows, to obtain an analysis result for the video process.

In an implementation, the plurality of computing tasks are deployed in a centralized manner. In other words, the plurality of computing tasks included in the AI application task are executed by a same computing device.

In another implementation, the plurality of computing tasks are deployed in a distributed manner. For example, the plurality of computing tasks are separately deployed on a plurality of computing devices, each computing device implements a corresponding function by executing a computing task deployed on the computing device, and the plurality of computing devices collaborate to implement a function of the AI application task that includes the plurality of computing tasks.

It should be understood that the computing device in this application may be an AI chip (for example, a chip including a central processing unit (central processing unit, CPU), a graphics processing unit (graphics processing unit, GPU), a field programmable gate array (field programmable gate array, FPGA), or an application-specific integrated circuit (application-specific integrated circuit, ASIC)), a graphics card, a server, a virtual machine, or the like.

However, in the foregoing two implementations, after the AI application task is deployed in a related technology, a corresponding computing task can be completed only in a fixed deployment manner. As a result, resource utilization of an overall system in which the AI application task is deployed is low. For example, when the AI application task is deployed on a first computing device, in a process in which the first computing device executes the computing tasks in the AI application task, some computing tasks may require small computing power in the execution process, but require large computing memory occupation. In this case, because memory that can be provided for another computing task is insufficient, other computing power in the computing device cannot be used to execute the another computing task in a process of executing this type of computing task. As a result, resource utilization of the computing device is insufficient. For another example, in a process in which a first computing device executes the computing tasks in the AI application task, some computing tasks may require large computing power in the execution process, but require small computing memory occupation. In this case, because computing power that can be provided for another computing task is insufficient, waste of computing memory in the computing device occurs in a process of executing this type of computing task. As a result, resource utilization of the computing device is insufficient.

A resource of the computing device is a computing resource required for executing a computing task, and the computing device includes a computing power resource, a memory resource, and the like, for example, a computing power resource provided by a general-purpose processor (for example, the CPU) and an AI processor (for example, the GPU), and a memory resource provided by processor memory (for example, CPU memory) and AI computing memory (for example, GPU memory). The processor memory is memory allocated to the general-purpose processor, and the AI computing memory is memory allocated to the AI processor. When the computing task is executed by the AI processor, the AI computing memory needs to be occupied.

It should be understood that, in this application, computing power required in a process of executing a computing task indicates a quantity or a quantity proportion of computing resources that need to be used in a computing device per unit time when the computing task is executed, or time or a time proportion of using a computing resource by a computing task per unit time. For example, when the computing device is a graphics card including a GPU and a memory, the computing power required in the process of executing the computing task may be indicated by actual time consumed by occupying a GPU computing resource by the computing task per second. For example, the actual time consumed by occupying the GPU per second (1 second = 1000 milliseconds) is 10 milliseconds. When the computing task is invoked for one time per second, the computing power required by the computing task may be indicated as follows: (10 milliseconds/1000 milliseconds) x 1 x 100% = 1%.

It should be further understood that, in this application, computing memory required in the process of executing the computing task indicates an amount of memory or a memory proportion, in the computing device, that is occupied when the computing task is executed. An example in which the computing device is a graphics card including a GPU and a memory is still used. Computing memory required in the process of executing the computing task may be indicated by a ratio of memory (also referred to as graphics memory) in a graphics card that needs to be occupied by running the computing task to a memory rating of the graphics card.

An embodiment of this application provides an AI application task management method. The method includes: In a process in which a first computing device executes a plurality of computing tasks related to one AI application task, a management apparatus determines, from the plurality of computing tasks, a target computing task to be executed by a second computing device. The first computing device sends, to the second computing device, data required for executing the target computing task. The second computing device uses the data sent by the first computing device as input data of the target computing task, and executes the target computing task based on the input data. The data required for executing the target computing task includes data that has a data association between the target computing task and at least one other computing task related to the AI application task. The another computing task is a computing task other than the target computing task in the AI application task. A data association between computing tasks means that input data of one computing task is output data of one or more computing tasks that have been invoked.

According to the AI application task management method, in a process in which the first computing device executes the AI application task, the target computing task can be adjusted to be executed by the second computing device. In other words, in the method, the computing task can be flexibly scheduled in the process in which the AI application task is executed. This helps improve resource utilization and/or computing task processing efficiency of the first computing device and the second computing device, and improves running performance of an entire system used to implement the AI application task.

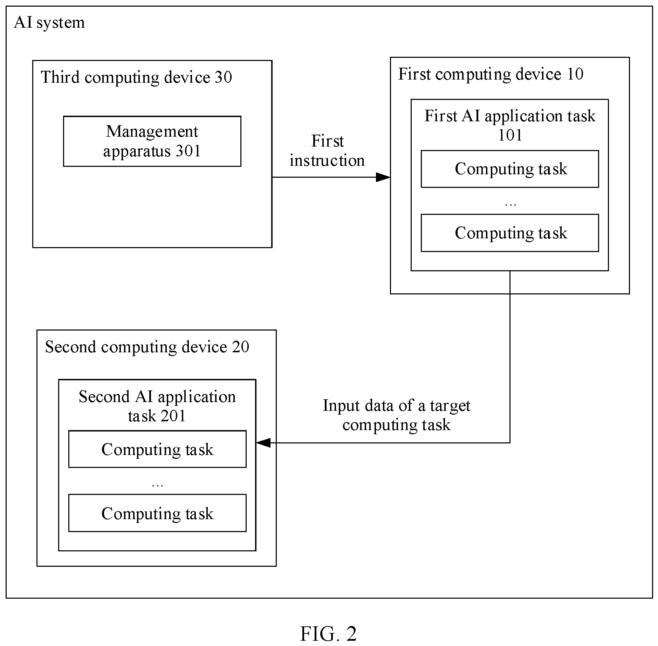

FIG. 2 is a schematic diagram of an AI system related to an AI application task management method according to an embodiment of this application. As shown in FIG. 2, the AI system includes a first computing device 10, a second computing device 20, and a third computing device 30. The third computing device 30 is connected to the first computing device 10 and the second computing device 20 through a communication path. Optionally, the AI system may further include more computing devices. The following uses the AI system shown in FIG. 2 as an example to describe working principles of an AI system related to an AI application task management method according to an embodiment of this application.

As shown in FIG. 2, a first AI application task 101 is deployed on the first computing device 10. A second AI application task 201 is deployed on the second computing device 20. A management apparatus 301 is deployed on the third computing device 30. The management apparatus 301 is configured to: in a process of executing the first AI application task, determine, from a plurality of computing tasks included in the first AI application task 101, a target computing task to be executed by the second computing device 20, and send a first instruction to the first computing device 10. Correspondingly, the first computing device 10 is further configured to send, to the second computing device 20 according to the first instruction, data obtained by executing at least one other computing task, where there is a data association between the at least one other computing task and the target computing task. In addition, the second computing device 20 is further configured to execute the target computing task based on the data obtained by executing the at least one other computing task. It can be learned from FIG. 2 that, in the AI system shown in FIG. 2, the management apparatus may be independently deployed on the third computing device 30.

Optionally, the third computing device 30, the first computing device 10, and the second computing device 20 may all be graphics cards, AI computing chips, physical machines, bare metal servers, or cloud servers. For example, the third computing device 30, the first computing device 10, and the second computing device 20 may all be the AI computing chips. When the first computing device 10 and the second computing device 20 are the graphics cards or the AI computing chips, the first computing device 10 and the second computing device 20 may be separately deployed on different hosts, or deployed on a same host. When the third computing device 30, the first computing device 10, and the second computing device 20 are the graphics cards or the AI computing chips, the third computing device 30 may be deployed on a separate host relative to the first computing device 10 and the second computing device 20; or the third computing device 30 may be deployed on a same host as some or all of the first computing device 10 and the second computing device 20.

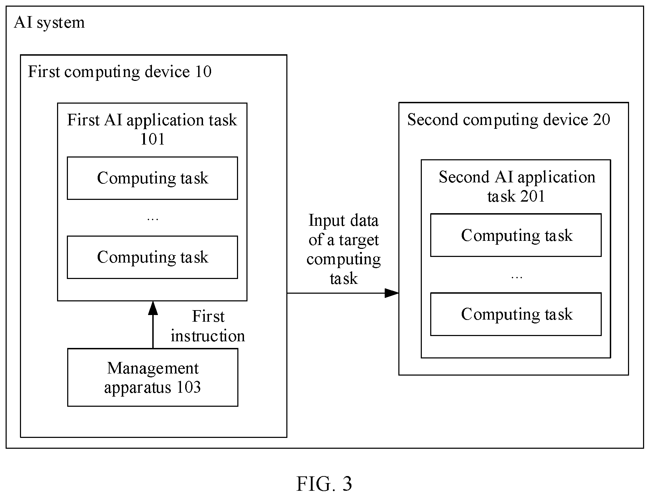

FIG. 3 is a schematic diagram of an AI system related to another AI application task management method according to an embodiment of this application. As shown in FIG. 3, the AI system includes the first computing device 10 and the second computing device 20. The first computing device 10 is connected to the second computing device 20 through a communication path. Optionally, the AI system may further include more computing devices. The following uses the AI system shown in FIG. 3 as an example to describe working principles of an AI system related to another AI application task management method according to an embodiment of this application.

As shown in FIG. 3, the first AI application task 101 is deployed on the first computing device 10. The second AI application task 201 is deployed on the second computing device 20. A management apparatus 103 is further deployed on the first computing device 10. Alternatively, the management apparatus 103 may be deployed on the second computing device 20. For functions of the first computing device 10, the second computing device 20, and the management apparatus 103, refer to related description in the AI system shown in FIG. 2. It can be learned from FIG. 3 that, in the AI system shown in FIG. 3, the management apparatus 103 is deployed on the computing device configured to execute the AI application task. When the management apparatus is deployed on the computing device configured to execute the AI application task, communication efficiency between the management apparatus and the apparatus configured to execute the AI application task in the computing device can be improved, and impact of an external factor such as a network can be reduced.

Optionally, the first computing device 10 and the second computing device 20 may be graphics cards, AI computing chips, physical machines, bare metal servers, or cloud servers. When the first computing device 10 and the second computing device 20 are the graphics cards or the AI computing chips, the first computing device 10 and the second computing device 20 may be separately deployed on different hosts, or deployed on a same host.

In an implementation, the AI system may be a cloud system, and may provide a cloud service for a user by using a computing resource on the cloud. Correspondingly, the first computing device 10, the second computing device 20, and the third computing device 30 may be computing devices on a cloud platform, for example, graphics cards, AI computing chips, or hosts (for example, cloud servers) of a server on the cloud platform. The AI application tasks executed by the first computing device 10 and the second computing device 20 may be deployed by a cloud service provider that has a cloud platform resource on a computing device on the cloud platform and provided for the user to use, or deployed by an AI algorithm provider on a computing device on the cloud platform and provided for the user to use.

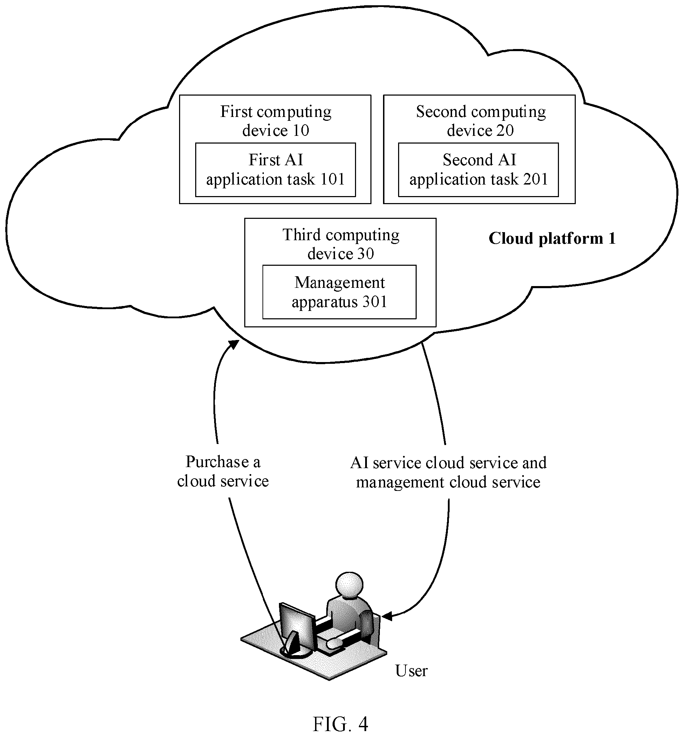

In this case, as shown in FIG. 4, a function of the management apparatus 301 may be abstracted by the cloud service provider into a management cloud service on a cloud platform 1 and provided for the user. The management cloud service can determine, in a process in which a first computing device executes a plurality of computing tasks in an AI application task, a target computing task to be executed by a second computing device from the plurality of computing tasks, and send a first instruction to the first computing device, to manage the target computing task. FIG. 4 is a schematic diagram of deploying the management apparatus 301 on the third computing device 30.

Optionally, as shown in FIG. 4, functions of the first AI application task 101 and/or the second AI application task 201 may also be abstracted by the cloud service provider into an AI service cloud service on the cloud platform 1, and the AI service cloud service can implement an AI service of the user by executing an AI application task. The AI service cloud service can be used together with the management cloud service. FIG. 4 is a schematic diagram in which the first computing device 10 is configured to execute the first AI application task, and the second computing device 20 is configured to execute the second AI application task.

For example, after the user purchases the AI service cloud service, the cloud platform can automatically provide the management cloud service for the AI service cloud service purchased by the user. In other words, in a process of providing the AI service cloud service for the user, the cloud platform monitors service quality of the cloud service, schedules a computing task in an AI application task by running the AI application task management method according to this embodiment of this application when the service quality is poor, and provides the management cloud service for the AI service cloud service purchased by the user, to ensure the service quality of the AI service cloud service purchased by the user

For another example, when purchasing the AI service cloud service, the user may choose whether to purchase the management cloud service. When the user purchases the AI service cloud service and the management cloud service, the management cloud service is used to monitor the service quality of the AI service cloud service, schedules the computing task in the AI application task by running the AI application task management method according to this embodiment of this application when the service quality is poor, and provides the management cloud service for the AI service cloud service purchased by the user, to ensure the service quality of the AI service cloud service purchased by the user

In another possible implementation, the management cloud service may be an independent cloud service in cloud services provided by the cloud platform. That is, the user may purchase the management cloud service on the cloud platform. When running an AI application task by using a resource provided by another platform, the user may purchase only the management cloud service on the cloud platform, to schedule a computing task in the AI application task in the another resource by using the management cloud service.

It should be noted that, in this embodiment of this application, the cloud platform 1 may be a cloud platform of a central cloud, a cloud platform of an edge cloud, or a cloud platform including a central cloud and an edge cloud. This is not specifically limited in this embodiment of this application. In addition, when both a computing device on which a management apparatus is deployed and a computing device configured to execute an AI application task are deployed on the cloud platform, the computing device on which the management apparatus is deployed and the computing device configured to execute the AI application task may be deployed on a same cloud or different clouds. For example, the computing device configured to execute the AI application task is deployed on the central cloud, and the computing device on which the management apparatus is deployed is deployed on the edge cloud.

In an implementation, the AI application task management method according to this embodiment of this application may be implemented by collaboratively using a plurality of function modules. The following uses the AI system shown in FIG. 2 as an example to describe a process of implementing the method by using the plurality of function modules.

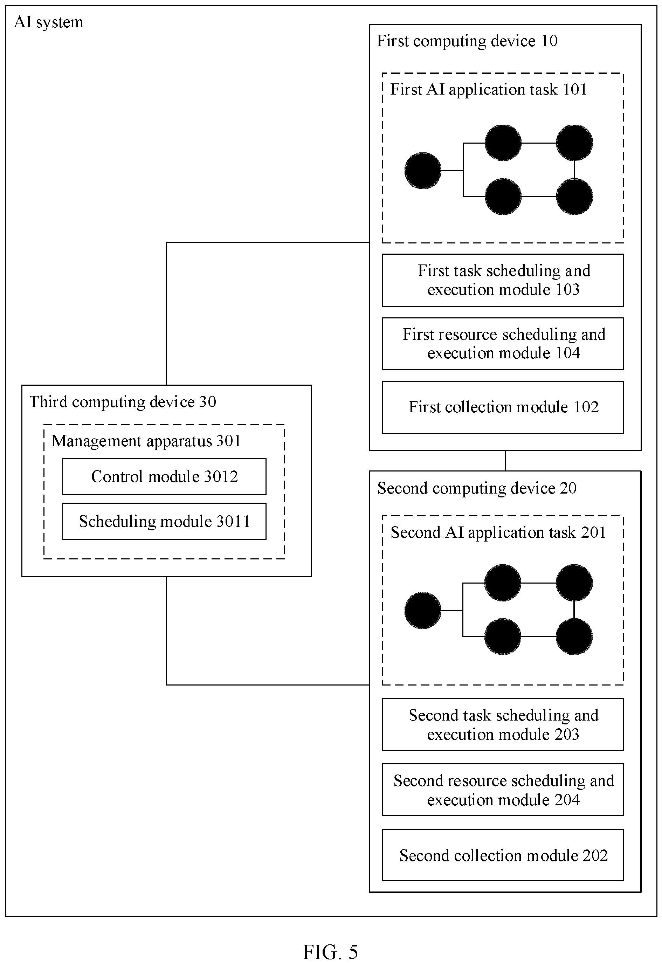

As shown in FIG. 5, in the AI application task management method according to this embodiment of this application, a function of the management apparatus 301 may be implemented by using a scheduling module 3011 and a control module 3012. A function of the first computing device 10 is implemented by using a first collection module 102, a first task scheduling and execution module 103, and a first resource scheduling and execution module 104. A function of the second computing device 20 is implemented by using a second collection module 202, a second task scheduling and execution module 203, and a second resource scheduling and execution module 204. FIG. 5 is a schematic diagram in which an AI application task includes five computing tasks, and black dots in FIG. 5 indicate the computing tasks. Functions of each functional module are as follows.

The first collection module 102 and the second collection module 202 are configured to: in a process of executing the AI application task, collect a running parameter of the AI application task; and send the running parameter to the scheduling module 3011, or process the running parameter to obtain resource usage information, and send the resource usage information to the scheduling module 3011. The running parameter is a basic parameter used to reflect resource usage statuses of the computing tasks in the AI application task and a resource usage status of a computing device configured to execute the AI application task. The resource usage information is information obtained after the running parameter is processed. The resource usage information is used to reflect the resource usage status of the computing task in the AI application task and the resource usage status of the computing device configured to execute the AI application task. For example, the running parameter is information about time when the computing tasks in the AI application task invoke a CPU in the execution process and information about time when the first computing device invokes the CPU. The resource usage information is information such as an invocation frequency, invocation duration, and consumption of the CPU by the computing tasks in the execution process; and information such as an invocation frequency, invocation duration, and consumption of the CPU by the first computing device, where the resource usage information is obtained based on the running parameter.

The scheduling module 3011 is configured to provide the resource usage information for the control module 3012 based on the received running parameter and/or resource usage information.

The control module 3012 is configured to: determine, based on the resource usage information and from a plurality of computing tasks included in the AI application task, a target computing task to be executed by the second computing device, send, to the scheduling module 3011, a notification indicating that the second computing task executes the target computing task, and send a first instruction to the first task scheduling and execution module 103.

Correspondingly, the scheduling module 3011 is further configured to: generate a resource scheduling policy based on the notification indicating that the target computing task is executed by the second computing task, and provide the resource scheduling policy for the second resource scheduling and execution module 204. The resource scheduling policy indicates the second resource scheduling and execution module 204 to prepare a computing resource for executing the target computing task. Optionally, the scheduling module 3011 is further configured to send the resource scheduling policy to a first resource scheduling module 1023. The resource scheduling policy indicates the first resource scheduling module 1023 to reclaim the resource required for executing the target computing task.

The first task scheduling and execution module 103 is configured to send, to the second computing device according to the received first instruction, data obtained by executing at least one other computing task, so that the second computing device executes the target computing task based on the data. For a function of the second task scheduling and execution module 203, correspondingly refer to a function of the first task scheduling and execution module 103.

The first resource scheduling and execution module 104 and the second resource scheduling and execution module 204 are configured to schedule a resource according to the resource scheduling policy, so that the computing device performs the computing task by using the scheduled resource.

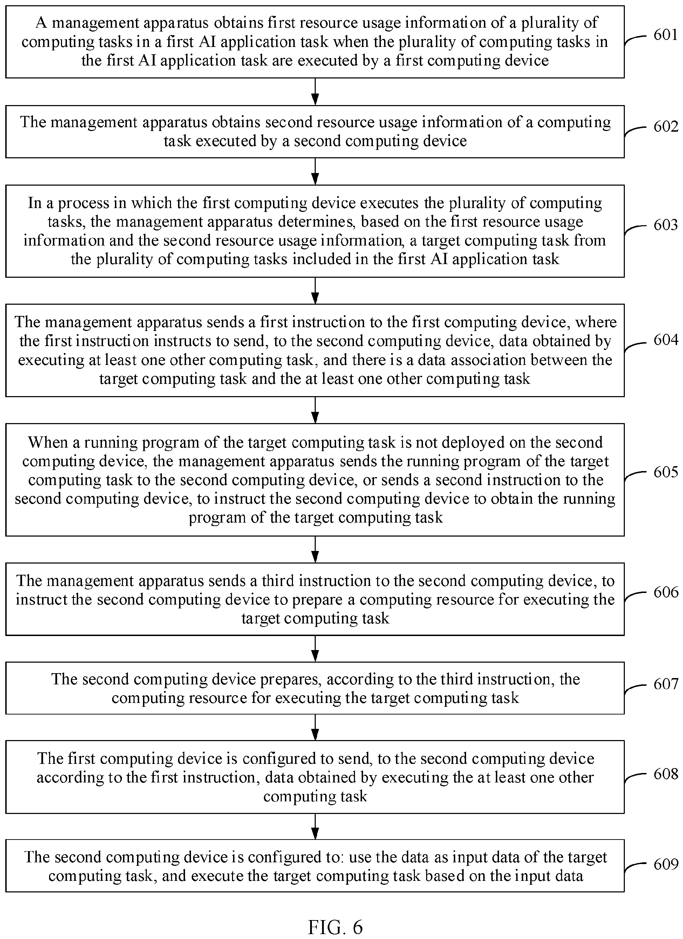

The following describes an implementation process of an AI application task management method according to an embodiment of this application. As shown in FIG. 6, an implementation process of the AI application task management method includes the following steps.

Step 601: A management apparatus obtains first resource usage information of a plurality of computing tasks in a first AI application task when the plurality of computing tasks in the first AI application task are executed by a first computing device.

In a process in which the first computing device (for ease of differentiation, the AI application task executed by the first computing device is referred to as a first AI application task below) executes the first AI application task, the first computing device may obtain a running parameter, and provide the running parameter for the management apparatus, so that the management apparatus obtains the first resource usage information based on the running parameter Alternatively, after obtaining the running parameter, the first computing device performs processing based on the running parameter to obtain the first resource usage information, and provides the first resource usage information for the management apparatus. The first AI application task includes one or more computing tasks. Each computing task is used to implement some functions of the solution, and a function implemented by each computing task may be implemented by executing one or more algorithms.

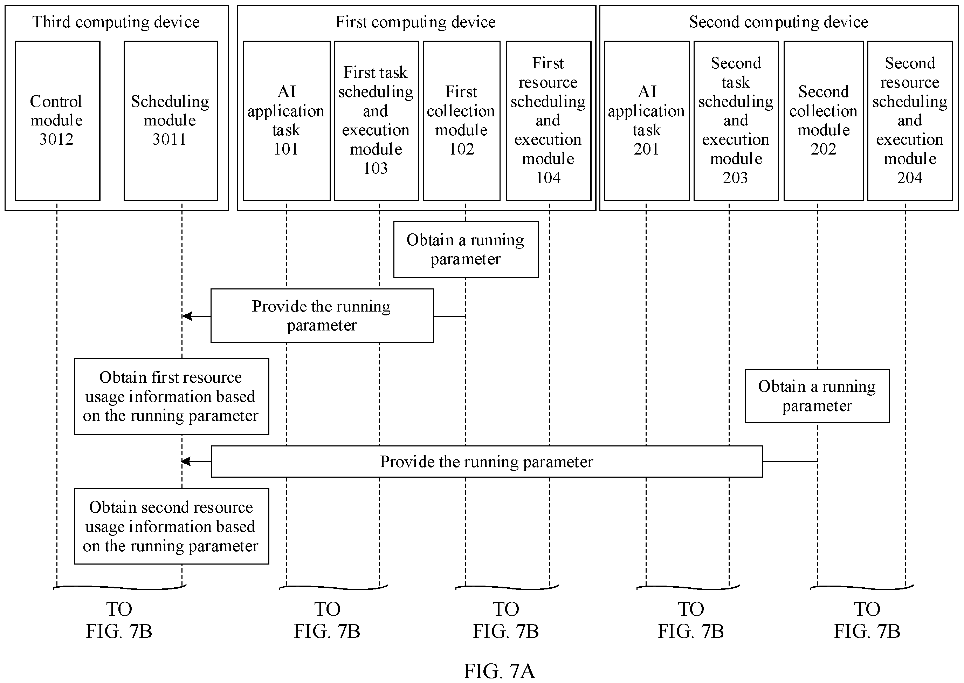

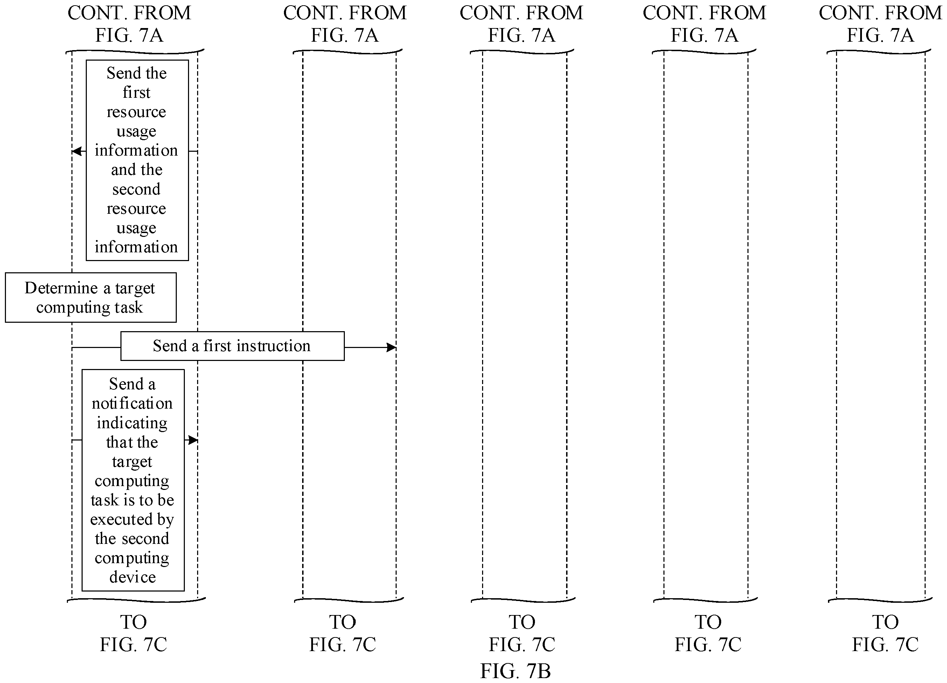

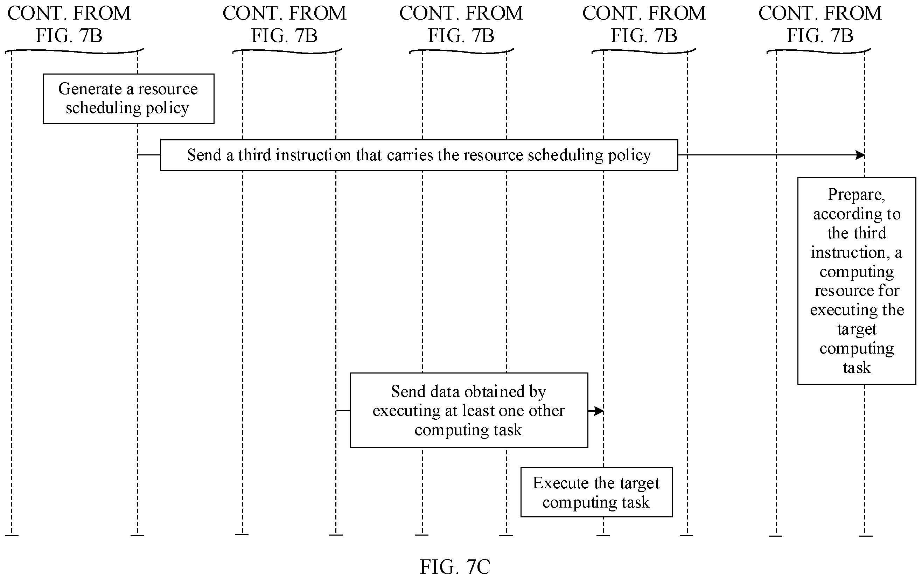

In an implementation, when the AI application task management method according to this embodiment of this application is implemented by using the AI system shown in FIG. 5, the first collection module 102 is disposed in the first computing device, and the scheduling module 3011 is disposed in the third computing device. As shown in FIG. 7A, FIG. 7B, and FIG. 7C, in the process in which the first computing device executes the first AI application task, the first collection module 102 can obtain the running parameter, and provide the running parameter for the scheduling module 3011, so that the scheduling module 3011 obtains the first resource usage information based on the running parameter The running parameter may be a basic parameter used to reflect resource usage statuses of the computing tasks in the first AI application task and a resource usage status of the first computing device. The first resource usage information is information obtained after the running parameter is processed. The first resource usage information is used to reflect the resource usage status of the computing task in the first AI application task and the resource usage status of the first computing device. For example, the running parameter is information about time when the computing tasks in the AI application task invoke a CPU in the execution process and information about time when the first computing device invokes the CPU. The first resource usage information is information such as an invocation frequency, invocation duration, and consumption of the CPU by the computing tasks in the execution process; and information such as an invocation frequency, invocation duration, and consumption of the CPU by the first computing device, where the first resource usage information is obtained based on the running parameter.

Optionally, the first resource usage information includes running information of at least one computing task in the first AI application task and resource information of the first computing device.

The running information of the at least one computing task may be obtained from one or more of the following running parameters: a quantity of invoking times of the computing task in unit duration, an input data amount of the computing task, an output data amount of the computing task, running duration of invoking the computing task by the first computing device, a consumption amount of a processor for invoking the computing task by the first computing device, and a consumption amount of memory for invoking the computing task by the first computing device. The consumption amount of the memory for invoking the computing task by the first computing device includes a consumption amount of processor memory and/or AI computing memory for invoking the computing task by the first computing device.

The resource information of the first computing device may be obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth. The rated value and the total consumption amount of the memory of the first computing device include a rated value and a total consumption amount of the processor memory of the first computing device, and/or a rated value and a total consumption amount of the AI computing memory of the first computing device.

The consumption amount of the processor for invoking the computing task is indicated by a quantity of cores and duration of the processor that is used to execute the invocation. For example, occupation duration of a single core when the invocation is executed is indicated by, for example, the consumption amount of the processor used to execute the invocation is consumption of one core for 10 milliseconds. The consumption amount of the memory is indicated by a range of memory used by the computing task when the computing task is invoked. For example, when the computing task is invoked, the consumption amount of the AI computing memory is 10 gigabytes (gigabyte, GB). Correspondingly, the first resource usage information may be a memory usage, a computing power proportion, or the like. The management apparatus may obtain the resource usage information through calculation based on the running parameter by using a preset algorithm.

For example, it is assumed that in a process in which the first computing device executes the first AI application task, running parameters obtained by the first collection module 102 include: When a computing task is executed for a data stream, an average quantity of times that the computing task is invoked per second is 0.5; each time the computing task is invoked, an input data amount of the computing task is 100 kilobytes (kilobyte, KB); each time the computing task is invoked, an output data amount of the computing task is 1 KB; each time the computing task is invoked, running duration of invoking the computing task by the first computing device is 10 milliseconds; each time the computing task is invoked, the consumption amount of the AI computing memory is from 500 to 600 megabytes (megabyte, MB); a total consumption amount of the processor memory used by all general-purpose processors in the computing device is 7.5 GB; a total consumption amount of the AI computing memory used by all computing tasks in the computing device is 7.5 GB; the bandwidth used by the processor memory of the computing device to transmit the data to the AI computing memory of the computing device is 1 gigabyte per second (GB/S); and the bandwidth used by the AI computing memory of the computing device to transmit the data to the processor memory of the computing device is 1 GB/S.

After the first collection module 102 sends the running parameter to the scheduling module 3011, the scheduling module 3011 may obtain the first resource usage information through calculation based on the running parameter by using the preset algorithm. When computing power required in the process of executing the computing task is indicated by actual time consumed by a GPU computing resource occupied by the computing task per second, because the average quantity of times that the computing task is invoked per second is 0.5, each time the computing task is invoked, the running duration of invoking the computing task by the first computing device is 10 milliseconds, one second is equal to 1000 milliseconds, and the computing power required in the process of executing the computing task may be indicated as (10 milliseconds/1000 milliseconds) x 0.5 x 100% = 0.5%. When the AI computing memory required in the process of executing the computing task is indicated by a ratio of the AI computing memory that needs to be occupied by running the computing task to the total consumption amount of the AI computing memory used by all the computing tasks in the first computing device, because each time the computing task is invoked, the consumption amount of the AI computing memory is from 500 to 600 MB, the total consumption amount of the AI computing memory used by all the computing tasks in the computing device is 7.5 GB, and 1 GB = 1024 MB, the consumption amount of the AI computing memory is 600 MB, and the AI computing memory required in the process of executing the computing task may be indicated as (600 MB/(7.5 GB x 1024)) x 100% = 7.8%. In other words, the first resource usage information includes: A proportion of Al computing power occupied by the computing task within one second is 0.5%, and a proportion of Al computing memory occupied by the computing task is 7.8%.

Optionally, the running parameter is obtained by the first computing device by performing collection based on a framework used for AI computing development, or by querying or collecting statistics by using a specific application programming interface (application programming interface, API). Alternatively, the running parameter may be collected and reported to the first computing device by an application program used to implement the first AI application task. In addition, for some function modules with fixed consumption, a running parameter of the function module may be a fixed value. Each time when the running parameter needs to be obtained, a preconfigured fixed value may be used as the running parameter, and the running parameter does not need to be obtained through collection. For example, when an object of video stream analysis is a video stream whose resolution is a specified value, consumption required by a video decoding stream is fixed, and values of running parameters corresponding to the video decoding stream may be all set to a fixed consumption value. When the running parameter needs to be obtained, the fixed consumption value is determined as the value of the running parameter corresponding to the video decoding stream. The fixed consumption value may be determined in a statistical manner.

It should be noted that the operation of obtaining the first resource usage information may be automatically performed by the management apparatus, or executed by the management apparatus through manual triggering. For example, the management apparatus may periodically and automatically obtain, based on a preset time period and in a process of executing the first AI application task, the first resource usage information that the first AI application task is executed in the first computing device. For another example, a system maintenance person or a user of the management apparatus may send a trigger instruction to the management apparatus when there is a scheduling requirement, so that the management apparatus obtains, according to the trigger instruction, the first resource usage information that the first AI application task is executed in the first computing device.

In addition, when the AI application task management method according to this embodiment of this application is abstracted from a cloud service into a management cloud service and provided for the user, and when purchasing the management cloud service, the user may configure, based on a requirement, whether the operation of obtaining the first resource usage information is automatically performed or manually triggered.

Step 602: The management apparatus obtains second resource usage information of a computing task executed by a second computing device.

The management apparatus may manage, based on resource usage statuses of a plurality of computing devices managed by the management apparatus, computing tasks executed by the computing devices, to improve running performance of an entire system including the plurality of computing devices. In addition, another computing device in the plurality of computing devices other than the first computing device may also execute the AI application task. The AI application task management method according to this embodiment of this application further includes: The management apparatus obtains the second resource usage information of the computing task executed by the second computing device. The second computing device is any computing device other than the first computing device in the plurality of computing devices managed by the management apparatus. In addition, for an implementation process of step 602, refer to the implementation process of step 601. Details are not described herein again.

It should be noted that step 602 is an optional step. When the AI application task management method is performed, it may be determined, based on an application requirement, whether to perform step 602. When step 602 is performed, the resource usage statuses of the plurality of computing devices managed by the management apparatus can be considered, and the computing task can be managed, so that the running performance of the entire system can be effectively ensured.

It should be understood that, in some implementations, a second AI application task executed by the second computing device may be the same as the first AI application task executed by the first computing device. In other words, computing tasks included in the first AI application task and computing tasks included in the second AI application task are the same. For example, FIG. 1 is a logical principle diagram of the first AI application task and the second AI application task. Both the first AI application task and the second AI application task are used to analyze a video stream in a traffic scenario, and both the first AI application task and the second AI application task include a plurality of computing tasks. The plurality of computing tasks are separately used to implement video decoding, vehicle target detection, vehicle target tracking, vehicle attribute detection, traffic light detection, traffic light status detection, and data output on the video stream.

In some other implementations, the second AI application task executed by the second computing device may alternatively be different from the first AI application task executed by the first computing device. The difference may mean that the plurality of computing tasks included in the second AI application task are partially different or all different from that included in the first AI application task. For example, the first AI application task executed by the first computing device includes five computing tasks. The five computing tasks are: video decoding, vehicle target detection, vehicle target tracking, vehicle attribute detection, and data output. The second AI application task executed by the second computing device includes three computing tasks. The three computing tasks are: traffic light detection, traffic light status detection, and data output. It can be learned that the computing tasks in the first AI application task are partially the same as the AI computing tasks in the second AI application task. For another example, the first AI application task executed by the first computing device includes four computing tasks. The four computing tasks are: video decoding, vehicle target detection, vehicle target tracking, and vehicle attribute detection. The second AI application task executed by the second computing device includes three computing tasks. The three computing tasks are: traffic light detection, traffic light status detection, and data output. It can be learned that the computing tasks in the first AI application task are all the same as the AI computing tasks in the second AI application task.

Step 603: In a process in which the first computing device executes the plurality of computing tasks, the management apparatus determines, based on the first resource usage information and the second resource usage information, a target computing task from the plurality of computing tasks included in the first AI application task.

After obtaining the first resource usage information and the second resource usage information, the management apparatus may perform, based on the first resource usage information and the second resource usage information, management and decision-making on the computing task in the AI application task, and determine the target computing task from the plurality of computing tasks included in the AI application task. The target computing task is a computing task to be executed by the second computing device and there is a data association between the target computing task and at least one other computing task related to the AI application task. Optionally, an output result of determining the target computing task may be indicated by using a graph structure. It should be understood that, in some other implementations, when step 602 is not performed, an implementation process of step 603 is: The management apparatus determines, based on the first resource usage information, the target computing task from the plurality of computing tasks included in the first AI application task.

In an implementation of determining the target computing task based on the first resource usage information and the second resource usage information, the management apparatus may determine, based on the first resource usage information, running efficiency of the plurality of computing tasks in the first AI application task, and/or a utilization status of resources that are used to run the plurality of computing tasks in the first computing device; and determine the target computing task from the plurality of computing tasks when the running efficiency of the plurality of computing tasks in the first computing device does not meet a preset first condition, and/or the utilization status of resources that are used to run the plurality of computing tasks and that are in the first computing device does not meet a preset second condition.

The first condition and the second condition may be set based on an application requirement. For example, the first condition may be that the running efficiency of the computing task in the first AI application task reaches a reference efficiency threshold, and the second condition may be that a difference between resource utilization of the computing task in the first AI application task for a first resource and resource utilization of the computing task in the first AI application task for a second resource is less than the reference difference threshold. For example, the second condition may be that a difference between a proportion of AI computing power and a proportion of of AI computing memory of the computing task in the first AI application task is less than the reference difference threshold. In addition, when the to-be-scheduled target computing task in the first AI application task is determined based on an analysis result, the to-be-scheduled target computing task may alternatively be determined based on the running efficiency and/or the utilization status of the resource of each computing task in the first AI application task. For example, when a difference between a proportion of AI computing power and a proportion of AI computing memory of a computing task in the first AI application task is greater than a specified difference threshold, the computing task is determined as the target computing task. In addition, when the target AI computing task is determined, another factor may be further referred to. For example, when a difference between a proportion of AI computing power and a proportion of AI computing memory of a computing task in the first AI application task is greater than a specified difference threshold, and resources such as a memory copy bandwidth and a network bandwidth of the first computing device can support scheduling of the computing task to be executed by the second computing device, the computing task is determined as the target computing task.

When the running efficiency of the computing task in the first AI application task and/or the utilization status of the resources of the computing tasks in the first AI application task do/does not meet the corresponding condition, the target computing task to be executed by the second computing device is determined from the plurality of computing tasks in the first AI application task. The running efficiency and/or the resource utilization of the first AI application task can be effectively improved.

Optionally, a process in which the management apparatus determines that the second computing device executes the target computing task may also be performed with reference to running efficiency and utilization statuses of resources that are of the first computing device and the second computing device and that are for executing the computing task. For example, when the running efficiency of the plurality of computing tasks in the second computing device does not meet the first condition, and/or the utilization status of the resources used to run the plurality of computing tasks in the second computing device does not meet the second condition, the management apparatus determines that the second computing device executes the target computing task. For another example, when resource utilization of the target computing task for the first resource is less than resource utilization of the target computing task for the second resource, and resource utilization of the computing task in the second AI application task for the second resource is less than resource utilization of the computing task in the second AI application task for the first resource, the management apparatus may determine that the second computing device executes the target computing task.

Running efficiency and resource utilization of AI application tasks running in the plurality of computing devices managed by the management apparatus can be considered from a global perspective by determining that the target computing task is executed by the second computing device based on the first resource usage information and the second resource usage information. An AI computing task in the first AI application task can be managed when the overall running efficiency and/or the resource utilization status of the first AI application task are/is poor. Short plank effect of the entire system can be reduced at the cost of executing a scheduling operation, to improve the running performance of the entire system of the plurality of computing devices managed by the management apparatus.

In a possible implementation, when the AI application task management method according to this embodiment of this application is implemented by using the AI system shown in FIG. 5, the scheduling module 3011 and the control module 3012 are disposed in the third computing device, as shown in FIG. 7A, FIG. 7B, and FIG. 7C. After obtaining the first resource usage information and the second resource usage information, the scheduling module 3011 sends the first resource usage information and the second resource usage information to the control module 3012, and the control module 3012 determines, based on the first resource usage information and the second resource usage information from the plurality of computing tasks in the first AI application task, the target computing task to be executed by the second computing device.

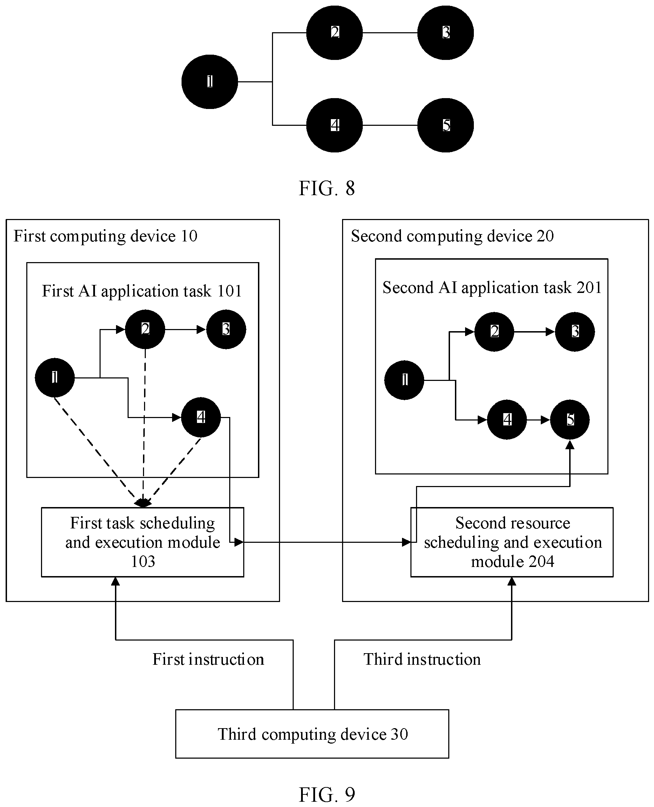

For example, it is assumed that the first computing device executes the first AI application task. For an execution logic diagram of the first AI application task, refer to FIG. 8. The first AI application task includes one to five computing tasks shown in FIG. 8. In addition, the first resource usage information in a process in which the first AI application task is run on the first computing device includes: A proportion of AI computing power occupied by a fifth computing task in the first AI application task in one second is 0.5%, and a proportion of AI computing memory occupied by the fifth computing task in the first AI application task is 7.8%. The second computing device executes the second AI application task. For an execution logic diagram of the second AI application task, still refer to FIG. 8. The second AI application task includes one to five computing tasks shown in FIG. 8. In addition, the second resource usage information in a process in which the second AI application task is run on the second computing device includes: A proportion of AI computing power occupied by a fifth computing task in the second AI application task in one second is about 8%, and a proportion of AI computing memory occupied by the fifth computing task in the second AI application task is about 0.5%.

The control module 3012 may learn, based on the first resource usage information and the second resource usage information, that the proportion of AI computing memory of the fifth computing task executed by the first computing device is greater than the proportion of AI computing power, and a difference between the proportion of AI computing memory and the proportion of AI computing power is greater than the reference difference threshold; and that the proportion of AI computing power of the second AI application task executed by the second computing device is greater than the proportion of AI computing memory, and a difference between the proportion of AI computing power and the proportion of AI computing memory is also greater than the reference difference threshold. Therefore, neither the first computing device nor the second computing device can utilize resources well. Considering that an amount of data that is output for one time by the fifth computing task is limited relative to a total copy bandwidth, the control module 3012 considers that a computing bandwidth of the fifth computing task may be distributed to the second computing device. In this case, the control module 3012 determines, based on the analysis result, to schedule the fifth computing task in the first AI application task to the second computing device for execution.

Step 604: The management apparatus sends a first instruction to the first computing device, where the first instruction instructs to send, to the second computing device, data obtained by executing the at least one other computing task, and there is a data association between the target computing task and the at least one other computing task.

After determining the target computing task, the management apparatus may send the first instruction to the first computing device, so that the first computing device sends, to the second computing device, data required for executing the target computing task. In this way, the second computing device executes the target computing task based on the data. The data required by the specified target computing task includes the data obtained by executing the at least one other computing task.

That the management apparatus sends the first instruction to the first computing device means that the management apparatus sends the first instruction to a function module that is in the first computing device and that is configured to send, to the second computing device, the data required for executing the target computing task. When the management apparatus is deployed on the first computing device, the management apparatus may be a virtual apparatus that is in the first computing device and has the foregoing function, and the sending action is a sending action between different function modules in the first computing device. When the management apparatus is deployed on the third computing device, the sending action is a sending action between different computing devices.

In an implementation, when the AI application task management method according to this embodiment of this application is implemented by using the AI system shown in FIG. 5, the control module 3012 is disposed in the third computing device, and the first task scheduling and execution module 103 is disposed in the first computing device. As shown in FIG. 7A, FIG. 7B, and FIG. 7C, after determining the target computing task, the control module 3012 may send the first instruction to the first task scheduling and execution module 103, so that the first task scheduling and execution module 103 sends, to the second computing device according to the first instruction, the data required for executing the target computing task. In this case, that the management apparatus sends the first instruction to the first computing device is a sending action between different devices.

Step 605: When a running program of the target computing task is not deployed on the second computing device, the management apparatus sends the running program of the target computing task to the second computing device, or sends a second instruction to the second computing device, to instruct the second computing device to obtain the running program of the target computing task.

The running program of the target computing task may be deployed on the second computing device, or the running program of the target computing task may not be deployed on the second computing device. When the running program of the target computing task is not deployed on the second computing device, before the target computing task is executed by the second computing device, the running program of the target computing task needs to be first deployed on the second computing device.

Optionally, the management apparatus may obtain the running program of the target computing task from a computing device that stores the running program of the target computing task, and send the running program of the target computing task to the second computing device. For example, when some interaction transactions between different computing devices need to be implemented by using the management apparatus, it is assumed that the first computing device stores the running program of the target computing task. The management apparatus may first obtain the running program of the target computing task from the first computing device. Then, the management apparatus sends the running program of the target computing task to the second computing device. That the management apparatus obtains the running program of the target computing task from the first computing device may include: The management apparatus actively reads the running program of the target computing task from the first computing device, or receives the running program of the target computing task sent by the first computing device.

Alternatively, the management apparatus may send the second instruction to the second computing device, to instruct the second computing device to obtain the running program of the target computing task from the computing device that stores the running program of the target computing task. Correspondingly, after receiving the second instruction, the second computing device may directly obtain, according to the second instruction, the running program of the target computing task from the computing device that stores the running program of the target computing task. In addition, a process in which the second computing device obtains the running program of the target computing task from the computing device that stores the running program of the target computing task may include: The second computing device sends an obtaining request to the computing device that stores the running program of the target computing task, to request the computing device to send the running program of the target computing task to the second computing device, or read the running program of the target computing task from the computing device that stores the running program of the target computing task.

It should be noted that step 605 is an optional step. When the running program of the target computing task is not deployed on the second computing device, step 605 needs to be performed. When the running program of the target computing task is deployed on the second computing device, step 605 does not need to be performed. After step 604 is completed, step 606 may be directly performed.

Step 606: The management apparatus sends a third instruction to the second computing device, to instruct the second computing device to prepare a computing resource for executing the target computing task.

To ensure running performance of the second computing device in executing the target computing task, after determining the target computing task, the management apparatus further needs to send the third instruction to the second computing device, to instruct the second computing device to prepare the computing resource for executing the target computing task.

In an implementation, the management apparatus may obtain a computing requirement of the target computing task, determine, based on the computing requirement, the computing resource required for running the target computing task, generate a resource scheduling policy for the target computing task with reference to a resource in the second computing device, and send, to the second computing device, the third instruction that carries the resource scheduling policy, to instruct the second computing device to prepare, based on the resource scheduling, the computing resource for executing the target computing task. Optionally, the resource scheduling policy further instructs to schedule a resource in the first computing device, for example, instructs the first computing device to reclaim a resource used to execute the target computing task. It should be understood that, when the resource scheduling policy further instructs to schedule the resource in the first computing device, the management apparatus may further send the resource scheduling policy to the first computing device, so that the first computing device schedules the resource in the first computing device according to the resource scheduling policy. The computing requirement of the target computing task may be determined based on an input data amount and an output data amount of the target computing task, and an algorithm implemented by the target computing task.

For example, it is assumed that the resource scheduling policy carried in the third instruction instructs the second computing device to allocate the computing resource to execute the target computing task. Resources allocated to the target computing task include: providing two-core AI computing power and memory of 7.5 GB, adjusting the bandwidth used by the processor memory of the computing device to transmit the data to the AI computing memory of the computing device to 1 GB/s, and adjusting the bandwidth used by the AI computing memory to transmit the data to the processor memory of the computing device to 1 GB/s.

The management apparatus may perform scheduling and decision-making according to a preset resource scheduling rule, and generate the resource scheduling policy. By performing scheduling and decision-making according to the resource scheduling rule, short plank effect of the entire system can be reduced at the cost of performing the scheduling operation, and the running performance of the entire system can be improved.

In an implementation, when the AI application task management method according to this embodiment of this application is implemented by using the AI system shown in FIG. 5, the scheduling module 3011 and the control module 3012 are disposed in the third computing device, the first resource scheduling and execution module 104 is disposed in the first computing device, and the second resource scheduling and execution module 204 is disposed in the second computing device. As shown in FIG. 7A, FIG. 7B, and FIG. 7C, after determining the target computing task, the control module 3012 sends, to the scheduling module 3011, a notification indicating that the second computing device executes the target computing task. The scheduling module 3011 may generate a corresponding resource scheduling policy based on the notification, and send the resource scheduling policy to the second resource scheduling and execution module 204 and the first resource scheduling and execution module 104, so that the first resource scheduling and execution module 104 and the second resource scheduling and execution module 204 perform resource scheduling according to the resource scheduling policy.

It should be noted that a process of generating the resource scheduling policy may alternatively be performed by the second computing device. For example, after the management apparatus sends the third instruction to the second computing device, the second computing device may obtain the computing requirement of the target computing task according to the third instruction, determine, based on the computing requirement, the computing resource required for executing the target computing task, determine, with reference to the resource in the second computing device, the computing resource required for executing the target computing task, and generate the resource scheduling policy for the target computing task.

Step 607: The second computing device prepares, according to the third instruction, the computing resource for executing the target computing task.

After receiving the resource scheduling policy, the second computing device may schedule the resource of the second computing device in a manner indicated by the resource scheduling policy, to prepare the computing resource for executing the target computing task. As shown in FIG. 7A, FIG. 7B, and FIG. 7C, step 607 may be performed by the second resource scheduling and execution module 204. It should be understood that, when the resource scheduling policy further instructs to schedule the resource in the first computing device, the AI application task management method according to this embodiment of this application further includes: The first computing device schedules the resource in the first computing device according to the resource scheduling policy. For example, the first computing device reclaims the resource used to execute the target computing task. In addition, before the resource is reclaimed, the first computing device needs to determine that all computing tasks executed by using the resource are offloaded. That the first computing device schedules the resource in the first computing device according to the resource scheduling policy may be performed by the first resource scheduling and execution module 104.

Step 608: The first computing device sends, to the second computing device according to the first instruction, the data obtained by executing the at least one other computing task.

After determining that the second computing device executes the target computing task, the first computing device needs to send, to the second computing device, the data required for executing the target computing task. The data required for executing the target computing task includes the data obtained by executing the at least one other computing task. There is the data association between the at least one other computing task and the target computing task.

In a possible implementation, as shown in FIG. 7A, FIG. 7B, and FIG. 7C, the operation of sending, to the second computing device, the data required for executing the target computing task may be performed by the first task scheduling and execution module 103. In addition, because a delay may exist in a process of sending the data required for executing the target computing task, the first task scheduling and execution module 103 is further responsible for caching and managing the data required for executing the target computing task, for example, temporarily caching the data required for executing the target computing task.

Step 609: The second computing device uses the data as input data of the target computing task, and executes the target computing task based on the input data.

After the computing resource is prepared for the target computing task, the running program of the target computing task may be run by using the computing resource prepared for the target computing task, and the data obtained by executing the at least one other computing task is used as the input data of the target computing task, to execute the target computing task.

For example, it is assumed that the target computing task is the fifth computing task in the first AI application task. The management apparatus instructs to reclaim the resource that is in the first computing device and that is used to run the target AI computing task. Before the target computing task is scheduled to the second computing device, the first computing device is configured to execute the first AI application task, the second computing device is configured to execute the second AI application task, and both the first AI application task and the second AI application task include the target computing task. After the target computing task is scheduled to be executed by the second computing device, an execution logic diagram of the first AI application task and the second AI application task is shown in FIG. 9. In other words, the fifth computing task is no longer executed by the first computing device, and an operation performed by the fifth computing task originally deployed on the first computing device is executed by a fifth computing task run by the second computing device.

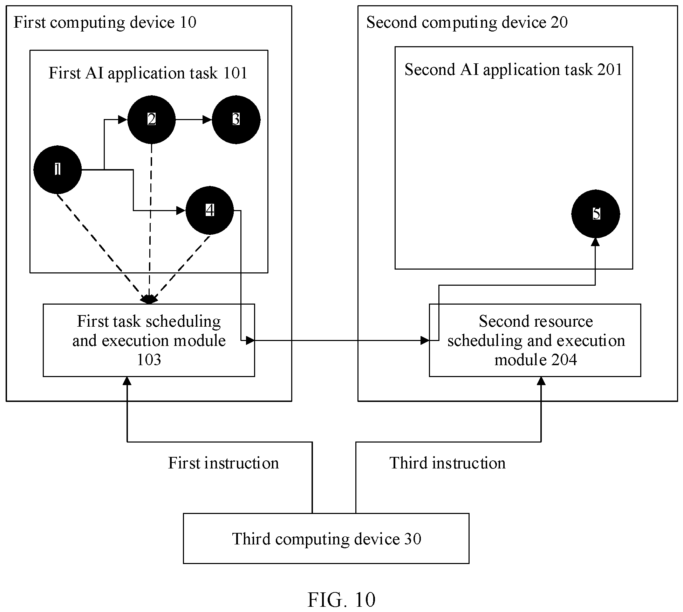

For another example, it is assumed that the target computing task is the fifth computing task in the first AI application task. The management apparatus instructs to reclaim the resource that is in the first computing device and that is used to execute the target computing task. Before the target computing task is scheduled to the second computing device, no running program of any computing task is deployed on the second computing device. After the target computing task is scheduled to be executed by the second computing device, an execution logic diagram of the first AI application task and the second AI application task is shown in FIG. 10. In other words, the first computing device no longer executes the fifth computing task, and the second computing device instead executes the fifth computing task.

For another example, it is assumed that the target computing task is the fifth computing task in the first AI application task. The management apparatus instructs to reclaim the resource that is in the first computing device and that is used to execute the target computing task. Before the target computing task is scheduled to the second computing device, a running program of the fifth computing task in the first AI application task is not deployed on the second computing device. After the target computing task is scheduled to be executed by the second computing device, an execution logic diagram of the first AI application task and the second AI application task is shown in FIG. 10. In other words, the first computing device no longer executes the fifth computing task, and the second computing device instead executes the fifth computing task. For ease of viewing, FIG. 10 does not show a computing task that has been deployed on the second computing device before scheduling.

In conclusion, in the AI application task management method according to this embodiment of this application, in the process in which the first computing device executes the plurality of computing tasks included in the AI application task, the management apparatus determines, from the plurality of computing tasks, the target computing task to be executed by the second computing device, and the first computing device sends, to the second computing device, the data required for executing the target computing task. The second computing device uses the data sent by the first computing device as the input data of the target computing task, and executes the target computing task based on the input data. In a process in which the first computing device executes the AI application task, the target computing task can be scheduled to be executed by the second computing device. The computing task can be flexibly scheduled in the process in which the AI application task is executed. This helps improve resource utilization and/or computing task processing efficiency of the first computing device and the second computing device, and improves the running performance of the entire system used to implement the AI application task.

It should be noted that a sequence of steps of the AI application task management method according to this embodiment of this application may be properly adjusted, or steps may be correspondingly added or deleted based on a situation. For example, whether to perform step 602 may be determined based on an application requirement, or whether to perform step 605 may be determined based on an application requirement. Any variation method readily figured out by a person skilled in the art within the technical scope disclosed in this application shall fall within the protection scope of this application. Therefore, details are not described herein.

An embodiment of this application further provides an AI system. The AI system includes a first computing device, a second computing device, and a management apparatus. For an architecture of the AI system, refer to FIG. 2, FIG. 3, or FIG. 5. Functions of the first computing device, the second computing device, and the management apparatus are as follows.

The management apparatus is configured to determine a target computing task from a plurality of computing tasks. The target computing task is a computing task to be executed by the second computing device and there is a data association between the target computing task and at least one other computing task related to an AI application task.

The management apparatus is further configured to send a first instruction to the first computing device.

The first computing device is configured to send, to the second computing device according to the first instruction, data obtained by executing the at least one other computing task.

The second computing device is configured to: use the data as input data of the target computing task, and execute the target computing task based on the input data.

Optionally, the management apparatus is further configured to: obtain first resource usage information when the plurality of computing tasks are executed by the first computing device; and determine the target computing task from the plurality of computing tasks based on the first resource usage information.

Optionally, when a running program of the target computing task is not deployed on the second computing device, the management apparatus is further configured to: send the running program of the target computing task to the second computing device, or send a second instruction to the second computing device, to instruct the second computing device to obtain the running program of the target computing task.

Optionally, the management apparatus is further configured to send a third instruction to the second computing device, to instruct the second computing device to prepare a computing resource for executing the target computing task.

Optionally, the management apparatus is specifically configured to determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

Optionally, the management apparatus is further configured to obtain second resource usage information of a computing task executed by the second computing device.

Correspondingly, the management apparatus is specifically configured to determine the target computing task from the plurality of computing tasks based on the first resource usage information and the second resource usage information.

Optionally, the first resource usage information includes running information of at least one computing task of the plurality of computing tasks and resource information of the first computing device.

Optionally, the running information of the at least one computing task is obtained based on one or more of the following running parameters: a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task.

Optionally, the resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

Optionally, the management apparatus is deployed on the first computing device, the second computing device, or a third computing device, and the third computing device is connected to the first computing device and the second computing device through a communication path.

Optionally, the first computing device is a graphics card, an AI computing chip, or a server; the second computing device is a graphics card, an AI computing chip, or a server; and the third computing device is a graphics card, an AI computing chip, or a server.

In conclusion, in the AI system according to this embodiment of this application, in the process in which the first computing device executes the plurality of computing tasks included in the AI application task, the management apparatus determines, from the plurality of computing tasks, the target computing task to be executed by the second computing device, and the first computing device sends, to the second computing device, the data required for executing the target computing task. The second computing device uses the data sent by the first computing device as the input data of the target computing task, and executes the target computing task based on the input data. In a process in which the first computing device executes the AI application task, the target computing task can be scheduled to be executed by the second computing device. The computing task can be flexibly scheduled in the process in which the AI application task is executed. This helps improve resource utilization and/or computing task processing efficiency of the first computing device and the second computing device, and improves running performance of an entire system used to implement the AI application task.

It may be clearly understood by a person skilled in the art that, for the purpose of convenient and brief description, for detailed working processes of the management apparatus, the first computing device, and the second computing device, refer to corresponding content in the foregoing method embodiments. Details are not described herein again.

An embodiment of this application further provides a management apparatus. For an architecture of the management apparatus, refer to FIG. 5. As shown in FIG. 5, the management apparatus 301 includes the control module 3012 and the scheduling module 3011.

The control module 3012 is configured to: in a process in which a first computing device executes a plurality of computing tasks, determine a target computing task from the plurality of computing tasks. The target computing task is a computing task to be executed by a second computing device, and there is a data association between the target computing task and at least one other computing task related to an AI application task.

The scheduling module 3011 is configured to send a first instruction to the first computing device. The first instruction instructs the first computing device to send, to the target computing task in the second computing device, data obtained by executing the at least one other computing task.

Optionally, the control module 3012 is further configured to: obtain first resource usage information when the plurality of computing tasks are executed by the first computing device; and determine the target computing task from the plurality of computing tasks based on the first resource usage information.

Optionally, when a running program of the target computing task is not deployed on the second computing device, the scheduling module 3011 is further configured to: send the running program of the target computing task to the second computing device, or send a second instruction to the second computing device, to instruct the second computing device to obtain the running program of the target computing task.

Optionally, the scheduling module 3011 is further configured to send a third instruction to the second computing device, to instruct the second computing device to prepare a computing resource for executing the target computing task.

Optionally, the control module 3012 is specifically configured to determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

Optionally, the control module 3012 is further configured to obtain second resource usage information of a computing task executed by the second computing device. Correspondingly, the control module 3012 is specifically configured to determine the target computing task from the plurality of computing tasks based on the first resource usage information and the second resource usage information.

Optionally, the first resource usage information includes running information of at least one computing task of the plurality of computing tasks and resource information of the first computing device.

Optionally, the running information of the at least one computing task is obtained based on one or more of the following running parameters: a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task.

Optionally, the resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

Optionally, the management apparatus is deployed on the first computing device, the second computing device, or a third computing device, and the third computing device is connected to the first computing device and the second computing device through a communication path.

Optionally, the first computing device is a graphics card, an AI computing chip, or a server; the second computing device is a graphics card, an AI computing chip, or a server; and the third computing device is a graphics card, an AI computing chip, or a server.

In conclusion, in the management apparatus according to this embodiment of this application, in the process in which the first computing device executes the plurality of computing tasks included in the AI application task, the management apparatus determines, from the plurality of computing tasks, the target computing task to be executed by the second computing device, and sends the first instruction to the first computing device, so that the first computing device sends, to the second computing device, the data required for executing the target computing task. The second computing device uses the data sent by the first computing device as the input data of the target computing task, and executes the target computing task based on the input data. In a process in which the first computing device executes the AI application task, the target computing task can be scheduled to be executed by the second computing device. The computing task can be flexibly scheduled in the process in which the AI application task is executed. This helps improve resource utilization and/or computing task processing efficiency of the first computing device and the second computing device, and improves running performance of an entire system used to implement the AI application task.

It may be clearly understood by a person skilled in the art that, for the purpose of convenient and brief description, for a detailed working process of the management apparatus, namely, the module, refer to corresponding content in the foregoing method embodiments. Details are not described herein again.

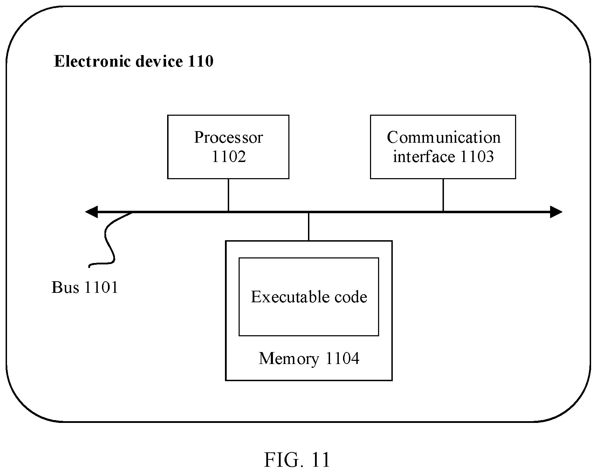

An embodiment of this application further provides an electronic device. The electronic device is configured to implement a function of the foregoing management apparatus by running an instruction. In the scenario shown in FIG. 2, the electronic device may be the third computing device 30, or may be an electronic device including the foregoing third computing device 30. For example, if the third computing device 30 is a graphics card, the electronic device may be a server including the graphics card. In the embodiment shown in FIG. 3, the electronic device may be the first computing device 10 that implements a function of the management apparatus 103, or may be an electronic device including the foregoing first computing device 10. As shown in FIG. 11, the electronic device 110 includes a bus 1101, a processor 1102, a communication interface 1103, and a memory 1104. The processor 1102, the memory 1104, and the communication interface 1103 communicate with each other through the bus 1101.

The processor 1102 may be an integrated circuit chip, and has a signal processing capability. In an implementation process, a function of the management apparatus in the AI application task management method according to embodiments of this application may be implemented by using an integrated logic circuit of hardware in the processor 502 or instructions in a form of software. The processor 502 may be an application-specific integrated circuit (application-specific integrated circuit, ASIC), a programmable logic device (programmable logic device, PLD), or another programmable logic device, a discrete gate or a transistor logic device, a discrete hardware component, or a combination of some or all of the foregoing parts. The PLD may be a complex programmable logic device (complex programmable logic device, CPLD), a field-programmable gate array (field-programmable gate array, FPGA), generic array logic (generic array logic, GAL), or any combination thereof.

The processor 1102 may be a general-purpose processor. The general-purpose processor may be a microprocessor, or the processor may be any conventional processor or the like, for example, a central processing unit (central processing unit, CPU), a graphics processing unit (graphics processing unit, GPU), a network processor (network processor, NP), or a combination of some or all of a CPU, a GPU, and an NP. Steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory 501. The processor 502 reads information and computer instructions that are in the memory 501, and implements, in combination with hardware of the processor 502, a function of the management apparatus in the AI application task management method in embodiments of this application.

The memory 1104 stores computer instructions and data. For example, the memory 1104 stores executable code for managing a function of an apparatus in the AI application task management method. The processor 1102 reads the executable code in the memory 1104 to perform the AI application task management method according to embodiments of this application. The memory 1104 may be a volatile memory or a non-volatile memory, or may include a combination of both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory (flash memory), a hard disk drive (hard disk drive, HDD), or a solid-state drive (solid-state drive, SSD). The volatile memory may be a random access memory (random access memory, RAM) that is used as an external cache. By way of example but not limitation, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory 1104 may further include another software module, for example, an operating system, for running a process. The operating system may be Linux^{™}, Unix^{™}, Windows^{™}, or the like.

The communication interface 1103 uses a transceiver module, for example but not for limitation, a transceiver, to implement communication between a computer 110 and another device or a communication network.

The bus 1101 may include a channel that transmits information between components of the electronic device 110 (for example, the processor 1102, the communication interface 1103, and the memory 1104).

This application further provides a computer-readable storage medium. The computer-readable storage medium may be a non-transient readable storage medium. When program instructions in the computer readable storage medium are run by an electronic device, the electronic device implements a function of the management apparatus in the AI application task management method according to this application. The computer-readable storage medium includes but is not limited to a volatile memory, for example, a random access memory, and a non-volatile memory, for example, a flash memory, a hard disk drive (hard disk drive, HDD), or a solid-state drive (solid-state drive, SSD).

An embodiment of this application further provides a computer program product including instructions. When the computer program product is run on an electronic device, the electronic device is enabled to implement a function of the management apparatus in the AI application task management method according to embodiments of this application.

An embodiment of this application further provides a chip. The chip includes a programmable logic circuit and/or program instructions, and is configured to implement a function of the management apparatus in the AI application task management method according to embodiments of this application when the chip runs.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. Unless otherwise explicitly limited, the term "one or more" refers to one or more, and the term "a plurality" refers to two or more.

The term " and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

The foregoing description is only optional embodiments of this application, but is not intended to limit this application. Any modification, equivalent replacement, or improvement made within the concept and principle of this application should fall within the protection scope of this application.

## Claims

1. An artificial intelligence AI application task management method, wherein an AI application task relates to a plurality of computing tasks, and the method comprises:
in a process in which a first computing device executes the plurality of computing tasks, determining, by a management apparatus, a target computing task from the plurality of computing tasks, wherein the target computing task is a computing task to be executed by a second computing device, and there is a data association between the target computing task and at least one other computing task related to the AI application task;
sending, by the management apparatus, a first instruction to the first computing device;
sending, by the first computing device to the second computing device according to the first instruction, data obtained by executing the at least one other computing task; and
using, by the second computing device, the data as input data of the target computing task, and executing the target computing task based on the input data.

2. The method according to claim 1, wherein before the determining, by a management apparatus, a target computing task from the plurality of computing tasks, the method further comprises:
obtaining, by the management apparatus, first resource usage information when the plurality of computing tasks are executed by the first computing device; and
the determining, by a management apparatus, a target computing task from the plurality of computing tasks comprises:
determining, by the management apparatus, the target computing task from the plurality of computing tasks based on the first resource usage information.

3. The method according to claim 1 or 2, wherein when a running program of the target computing task is not deployed on the second computing device, the method further comprises:
sending, by the management apparatus, the running program of the target computing task to the second computing device, or sending, by the management apparatus, a second instruction to the second computing device, to instruct the second computing device to obtain the running program of the target computing task.

4. The method according to any one of claims 1 to 3, wherein the method further comprises:
sending, by the management apparatus, a third instruction to the second computing device, to instruct the second computing device to prepare a computing resource for executing the target computing task.

5. The method according to any one of claims 1 to 4, wherein the determining, by a management apparatus, a target computing task from the plurality of computing tasks comprises:
determining, by the management apparatus, the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

6. The method according to claim 2, wherein the method further comprises: obtaining, by the management apparatus, second resource usage information of a computing task executed by the second computing device; and
the determining, by a management apparatus, a target computing task from the plurality of computing tasks comprises:
determining, by the management apparatus, the target computing task from the plurality of computing tasks based on the first resource usage information and the second resource usage information.

7. The method according to claim 2 or 6, wherein the first resource usage information comprises running information of at least one computing task of the plurality of computing tasks and resource information of the first computing device.

8. The method according to claim 7, wherein the running information of the at least one computing task is obtained based on one or more of the following running parameters:
a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task; and
the resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

9. The method according to any one of claims 1 to 8, wherein the management apparatus is deployed on the first computing device, the second computing device, or a third computing device, and the third computing device is connected to the first computing device and the second computing device through a communication path.

10. The method according to claim 9, wherein
the first computing device is a graphics card, an AI computing chip, or a server;
the second computing device is a graphics card, an AI computing chip, or a server; and
the third computing device is a graphics card, an AI computing chip, or a server.

11. An artificial intelligence AI system, wherein the AI system comprises a first computing device, a second computing device, and a management apparatus;
the management apparatus is configured to determine a target computing task from a plurality of computing tasks, wherein the target computing task is a computing task to be executed by the second computing device and there is a data association between the target computing task and at least one other computing task related to an AI application task;
the management apparatus is further configured to send a first instruction to the first computing device;
the first computing device is configured to send, to the second computing device according to the first instruction, data obtained by executing the at least one other computing task; and
the second computing device is configured to: use the data as input data of the target computing task, and execute the target computing task based on the input data.

12. The system according to claim 11, wherein the management apparatus is further configured to:
obtain first resource usage information when the plurality of computing tasks are executed by the first computing device; and
determine the target computing task from the plurality of computing tasks based on the first resource usage information.

13. The system according to claim 11 or 12, wherein when a running program of the target computing task is not deployed on the second computing device, the management apparatus is further configured to:
send the running program of the target computing task to the second computing device, or send a second instruction to the second computing device, to instruct the second computing device to obtain the running program of the target computing task.

14. The system according to any one of claims 11 to 13, wherein the management apparatus is further configured to:
send a third instruction to the second computing device, to instruct the second computing device to prepare a computing resource for executing the target computing task.

15. The system according to any one of claims 11 to 14, wherein the management apparatus is specifically configured to:
determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

16. The system according to claim 12, wherein the management apparatus is further configured to:
obtain second resource usage information of a computing task executed by the second computing device; and
the management apparatus is specifically configured to:
determine the target computing task from the plurality of computing tasks based on the first resource usage information and the second resource usage information.

17. The system according to claim 12 or 16, wherein the first resource usage information comprises running information of at least one computing task of the plurality of computing tasks and resource information of the first computing device.

18. The system according to claim 17, wherein the running information of the at least one computing task is obtained based on one or more of the following running parameters:
a quantity of invoking times of the computing task in unit duration, an input data amount of the computing task, an output data amount of the computing task, running duration of invoking the computing task by the first computing device, a consumption amount of a processor for invoking the computing task, and a consumption amount of memory for invoking the computing task; and
the resource information of the first computing device is obtained based on one or more of the following parameters: a rated value and a total consumption amount of memory of the first computing device, bandwidth used by processor memory of the first computing device to transmit data to AI computing memory of the first computing device and a rated value of the bandwidth, and bandwidth used by the AI computing memory of the first computing device to transmit data to the processor memory of the first computing device and a rated value of the bandwidth.

19. The system according to any one of claims 11 to 18, wherein the management apparatus is deployed on the first computing device, the second computing device, or a third computing device, and the third computing device is connected to the first computing device and the second computing device through a communication path.

20. The system according to claim 19, wherein
the first computing device is a graphics card, an AI computing chip, or a server;
the second computing device is a graphics card, an AI computing chip, or a server; and
the third computing device is a graphics card, an AI computing chip, or a server.

21. A management apparatus, wherein the management apparatus comprises a control module and a scheduling module;
the control module is configured to: in a process in which a first computing device executes a plurality of computing tasks, determine a target computing task from the plurality of computing tasks, wherein the target computing task is a computing task to be executed by a second computing device, and there is a data association between the target computing task and at least one other computing task related to an AI application task; and
the scheduling module is configured to send a first instruction to the first computing device, wherein the first instruction instructs the first computing device to send, to the target computing task in the second computing device, data obtained by executing the at least one other computing task.

22. The apparatus according to claim 21, wherein the control module is further configured to:
obtain first resource usage information when the plurality of computing tasks are executed by the first computing device; and determine the target computing task from the plurality of computing tasks based on the first resource usage information.

23. The apparatus according to claim 21 or 22, wherein when a running program of the target computing task is not deployed on the second computing device, the scheduling module is further configured to: send the running program of the target computing task to the second computing device, or send a second instruction to the second computing device, to instruct the second computing device to obtain the running program of the target computing task.

24. The apparatus according to any one of claims 21 to 23, wherein the scheduling module is further configured to send a third instruction to the second computing device, to instruct the second computing device to prepare a computing resource for executing the target computing task.

25. The apparatus according to any one of claims 21 to 24, wherein the control module is specifically configured to:
determine the target computing task from the plurality of computing tasks when running efficiency of the plurality of computing tasks in the first computing device does not meet a preset first condition, and/or a utilization status of resources that are used to run the plurality of computing tasks and that are in the first computing device does not meet a preset second condition.

26. The apparatus according to claim 22, wherein the control module is further configured to obtain second resource usage information of a computing task executed by the second computing device; and
the control module is specifically configured to determine the target computing task from the plurality of computing tasks based on the first resource usage information and the second resource usage information.

27. An electronic device, wherein the electronic device comprises a memory and a processor, and when the processor executes computer instructions stored in the memory, the electronic device implements a function of the apparatus according to any one of claims 21 to 26.

28. A computer-readable storage medium, wherein the computer-readable storage medium stores program instructions, and when the program instructions are run by an electronic device, the electronic device implements a function of the apparatus according to any one of claims 21 to 26.

29. A computer program product, wherein the computer program product comprises program instructions, and when the program instructions in the computer program product are run by an electronic device, the electronic device implements a function of the apparatus according to any one of claims 21 to 26.
